# EUROPEAN PATENT SPECIFICATION

(11) **EP 1 405 924 B1**
(45) Date of publication and mention of the grant of the patent: **15.08.2007**
(21) Application number: 02736081.7
(22) Date of filing: 13.06.2002
(51) Int. Cl.: C21B 13/10, C21B 13/00, C21B 13/08

(54) **METHOD FOR PRODUCING GRANULAR METAL**
VERFAHREN ZUR HERSTELLUNG VON KÖRNIGEM METALL
PROCEDE DE FABRICATION DE GRENAILLE

(30) Priority: 18.06.2001 JP 2001183932; 16.01.2002 JP 2002007854
(43) Date of publication of application: 07.04.2004
(73) Proprietor: KABUSHIKI KAISHA KOBE SEIKO SHO, Kobe-shi, Hyogo 651-8585 (JP)
(72) Inventor: ITO, Shuzo, c/o Kabushiki Kaisha Kobe Seiko Sho, Kobe-shi, Hyogo 651-2271 (JP); TSUGE,Osamu, c/o Kabushiki Kaisha Kobe Seiko Sho, Kobe-shi, Hyogo 651-2271 (JP)
(74) Representative: Müller-Boré & Partner Patentanwälte
(86) International application number: PCT/JP2002/005872
(87) International publication number: WO 2002/103064

(56) References cited:
- JP-A- 2000 212 651
- US-A- 6 036 744
- US-B1- 6 210 462

## Description

The present invention relates to methods for manufacturing metal nuggets. In particular, the present invention relates to an improved method for manufacturing high-purity metal nuggets such as iron nuggets that have a large diameter and superior transportation and handling qualities, the method including heating a mixture of a metal-oxide-containing substance and a carbonaceous reductant to reduce the metal oxide, in which an auxiliary material for increasing the fluidity of and promoting the cohesion of molten by-product slag is added to the material. The improved method achieves a high yield and high productivity.

This specification mainly describes a method for manufacturing iron nuggets to which the present invention is most effectively applied. However, the present invention is not limited to the manufacturing of iron nuggets. The present invention can also be effectively applied to the manufacture of ferrochromium or ferronickel by heating and reducing chromium-containing ore or nickel-containing ore, for example. In the present invention, the term "nuggets" does not necessarily mean those spherical in shape and includes those having an elliptical shape, an oval shape, and slightly deformed shapes thereof.

An example of a known method for manufacturing metallic iron by heating and reducing an iron oxide source is a direct iron-making process for obtaining reduced iron by directly reducing iron ore or iron oxide pellets using a carbonaceous material or a reducing gas. In particular, a shaft furnace process such as the Midrex process is known in the art. In the direct iron-making process, a reducing gas made from natural gas or the like is blown from a tuyere at the lower portion of the shaft furnace so as to obtain reduced iron by reducing iron oxide using the reducing power of the reducing gas.

Recently, a process for making reduced iron using a carbonaceous material such as coal as the reductant instead of natural gas has received much attention. For example, a so-called SL/RN process of heating and reducing sintered pellets of iron ore or the like with coal powder in a rotary kiln has already been put into practice.

The publication of USP 3,443,931 discloses yet another process for making reduced iron, the process including making blocks from a mixture of a carbonaceous material and iron oxide powder and heating and reducing the blocks on a rotary hearth. In this process, the reduction is performed by heating the blocks of a mixture of the carbonaceous material and powdered iron ore in a high-temperature atmosphere.

The reduced iron made by the processes described above may be directly used as an iron source for an electric furnace or may be subjected to briquetting or the like before it is used as the iron source. With the recent trends toward the recycling of scrap iron, the reduced iron made by the above processes is drawing much attention as an agent to decrease the ratio of metal impurities in the scrap, since the resulting reduced iron has a low content of metals other than iron.

A reducing melt process, such as a direct iron ore smelting (DIOS) reduction process, for making reduced iron by directly heating and reducing iron ore is also known in the art. In this process, the iron ore is pre-reduced to approximately 50 percent by mass (hereinafter denoted as %") or less of the metallic iron, and the pre-reduced iron is then allowed to directly react with carbon in an iron bath to make reduced metallic iron. However, since this process requires two stages, i.e., a pre-reduction and a final reduction in an iron bath, the operation is complicated. Moreover, since molten iron oxide (FeO) existing in the iron bath directly comes into contact with refractories, the refractories undergo significant wear, which is a problem. This is because iron oxide in a molten state significantly corrodes the refractory such as alumina or magnesia.

The publications of USP 6,036,744, Japanese Unexamined Patent Application Publications Nos. 09-256017, 2000-144224, and 11-131119, and the like disclose processes for making nuggets or blocks of high-purity metallic iron, the processes comprising heating and reducing a mixture of powders of a carbonaceous reductant and an iron oxide on a rotary hearth to prepare reduced iron and further heating the resulting reduced iron to separate the reduced iron from the by-product slag utilizing a difference in the specific gravities. The mixture may be pre-formed into blocks before it is heated on the rotary hearth, if necessary.

According to this process, the reduced iron made mainly by a solid-phase reduction is heated, and the melting point of the reduced iron was decreased by carburization of the reduced iron so as to promote melting. In this manner, the productivity of the metallic iron can be improved while avoiding the problem of significant refractory wear caused by the molten iron oxide (FeO).

However, when high-purity iron nuggets are made according to this process from a substance such as iron ore having a high gangue content, the amount of by-product slag increases, thereby degrading the cohesion property and decreasing the purity of the resulting metallic iron and yield. Moreover, when a substance containing CaO (for example, CaCO₃) is added to the material to adjust the basicity of a material having a high SiO₂ content or to desulfurize a material containing a carbonaceous reductant having a high sulfur content, the amount of by-product slag further increases, thereby further degrading the cohesion property of the by-product slag.

When the cohesion property of the by-product slag is degraded, separation of the metallic iron, produced by the reduction, from the by-product slag becomes difficult, formation of nuggets or blocks of the metallic iron is inhibited, and metallic iron enclosing slag is produced. Furthermore, a large amount of small metallic iron nuggets are produced and obstruct the separation from the by-product slag. Thus, the yield of the products having a size within a suitable range is decreased.

Moreover, the degradation of the cohesion property of the by-product slag frequently occurs even when the gangue content of the iron oxide source is low, depending on the type of iron oxide source, the type of slag components, and the slag composition.

The inventors have conducted research to overcome these problems and found that iron nuggets having a relatively large size can be made when a carbonaceous reductant having a high fixed carbon content is used in the process that includes the step of reducing the metal oxide in a solid state included in a material containing a carbonaceous reductant and an iron-oxide-containing substance by means of reducing melt in a furnace and the step of further heating the resulting metallic iron so as to melt the metallic iron while allowing the metallic iron to separate from by-product slag and form nuggets by cohesion. Based on this finding, a patent application has been filed.

Here, it has been confirmed that relatively large iron nuggets can be made at a high yield by controlling the fixed carbon content in the carbonaceous reductant to 73% or more, the volatile matter content in the material to 3.9% or less, and the amount of the carbonaceous reductant in the material to 45% or less of that of the iron oxide in the material, and by adjusting the temperature for melting the metallic iron prepared by the solid-reduction in the furnace to 1,400°C or more.

The above-described process is valuable since it examines the effect of the carbonaceous reductant on the cohesion property of metallic iron as a factor for making relatively large metallic iron nuggets at a high yield. However, a large degree of limitation is imposed as to the types of the applicable carbonaceous reductant.

Furthermore, CaCO₃ may be added to the material for the purpose of adjusting the basicity of slag component when the gangue content in the material, and particularly in the iron oxide source, is high, when the SiO₂ content in the material is high, or when desulfurization is required due to the carbonaceous reductant having a high sulfur content. In these cases, the amount of by-product slag increases, and the degradation of the cohesion property of the slag is inevitable, which is a problem.

Moreover, the cohesion property of the by-product slag may also decrease even when the gangue content in the material is low, depending on the types of the iron oxide source, the slag components, and slag composition. An improvement as to this point is also desired.

The present invention is made based on the above knowledge. An object of the present invention is to establish a process for making high-purity metal nuggets°, the process comprising heating and reducing a material containing metal oxide such as iron oxide and a carbonaceous reductant such as coke, and further heating so as to melt the metal and to allow the by-product slag to undergo cohesion while separating the slag from the metal, the process that can improve the cohesion property of the by-product slag produced during cohesion and separation of the molten slag, increases the purity of the resulting granular metal produced by heating and reducing, makes large metal nuggets having a uniform size, and reliably enhances the yield of the end product of the metal nuggets regardless of the type and amount of the gangue component, which varies according to the type of the metal oxide source.

A method for making metal nuggets according to the present invention overcomes these problems. The method includes heating a material containing a metal-oxide-containing substance and a carbonaceous reductant to reduce metal oxide in the material, and subsequently further heating the produced metal to melt the metal while allowing the metal to separate from by-product slag and to form granular iron, and is characterized in mixing a cohesion accelerator for the by-product slag in the above material, wherein the cohesion accelerator consists of at least one of calcium fluoride and boron oxide, and wherein the content C of the cohesion accelerator in the material is in the range of 0.2 to 2.5 mass %, and preferably in the range of 0.4 to 2.0 mass %.

The above-described material is preferably a mixture of powders of the metal-oxide-containing substance, the carbonaceous reductant, and the cohesion accelerator. The mixture to be used is preferably uniform. More preferably, a mixture formed into pellets, briquettes, or the like, or press-formed into a compact is preferably used.

Calcium fluoride (CaF₂) or boron oxide (B₂O₅) is used as the cohesion accelerator. These may be used alone or in combination, if necessary. Among these components, fluorite which contains CaF₂ as the primary component is particularly preferable as the cohesion accelerator in overall view of the cost and the cohesion acceleration effects.

In implementing the method of the present invention, the material is preferably heated and reduced continuously using a moving bed furnace or a rotary hearth furnace. During the process, a layer of a carbonaceous material may be bed on the hearth in advance, and then the material may be fed to be heated and reduced on the hearth. In this manner, the atmosphere adjacent to the materials on the hearth can be always kept at a high reducing potential, and thus the reoxidation of the reduced iron due to oxidative exhaust gas (such as carbonic acid gas and steam) from a burner, which is used to heat the furnace, can be reliably prevented.

In this method, metal nuggets can be manufactured by using iron oxide as the metal oxide and effectively using at least one of iron ore, steel-making dust, steel-making waste materials, and metal scrap as the metal-oxide-containing substance. Here, dust generated during the production of the stainless-steel ingots, hereinafter referred to as "stainless-steel dust" is preferably used as the steel-making dust together with an iron oxide source such as iron ore and mill scale. In this manner, valuable metals such as Ni, Cr, and Mo contained in the dust can be captured by the iron nuggets and thus be recovered effectively.

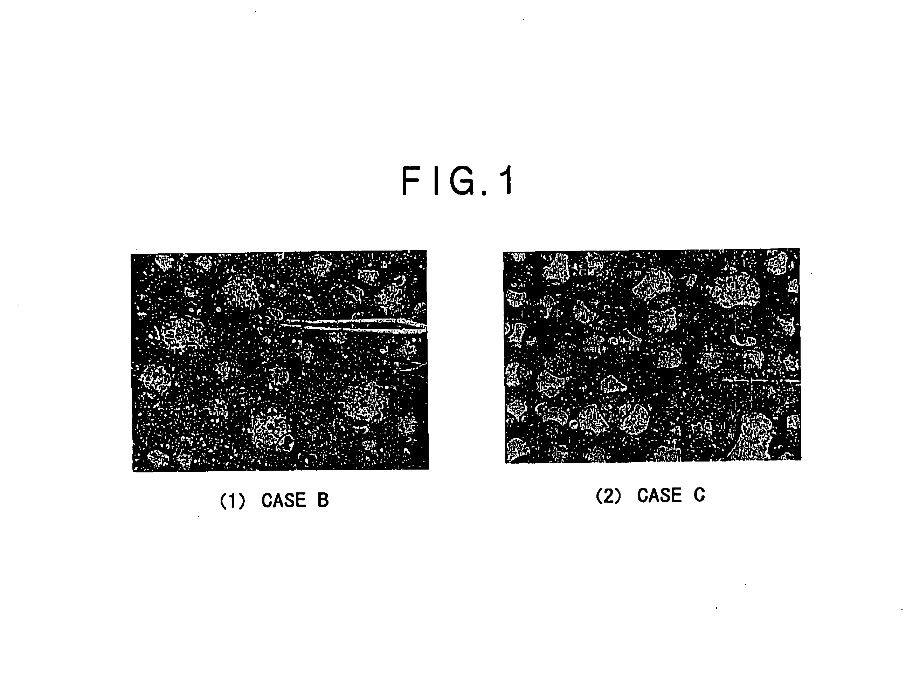

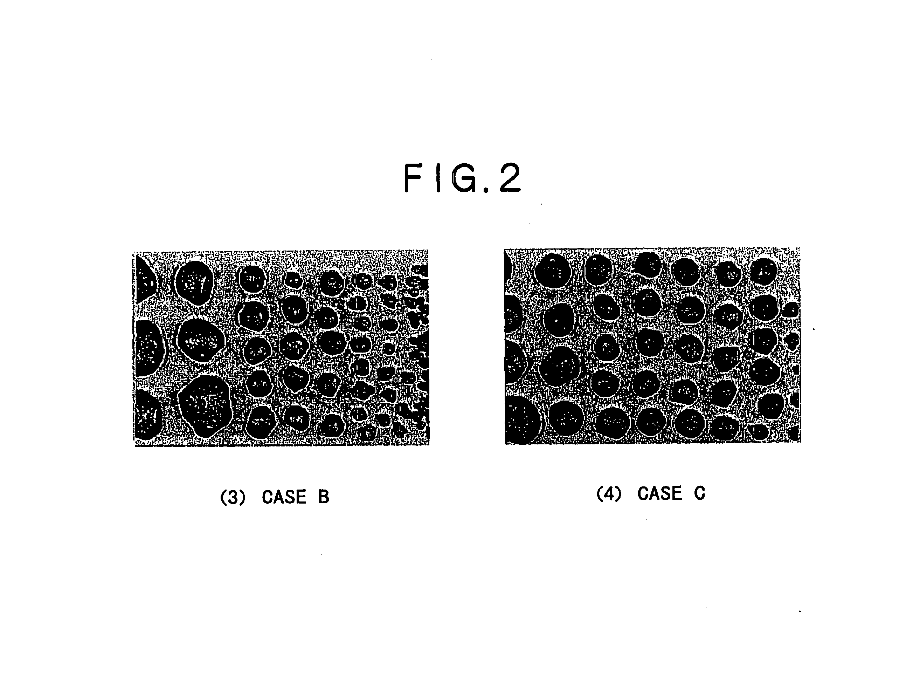

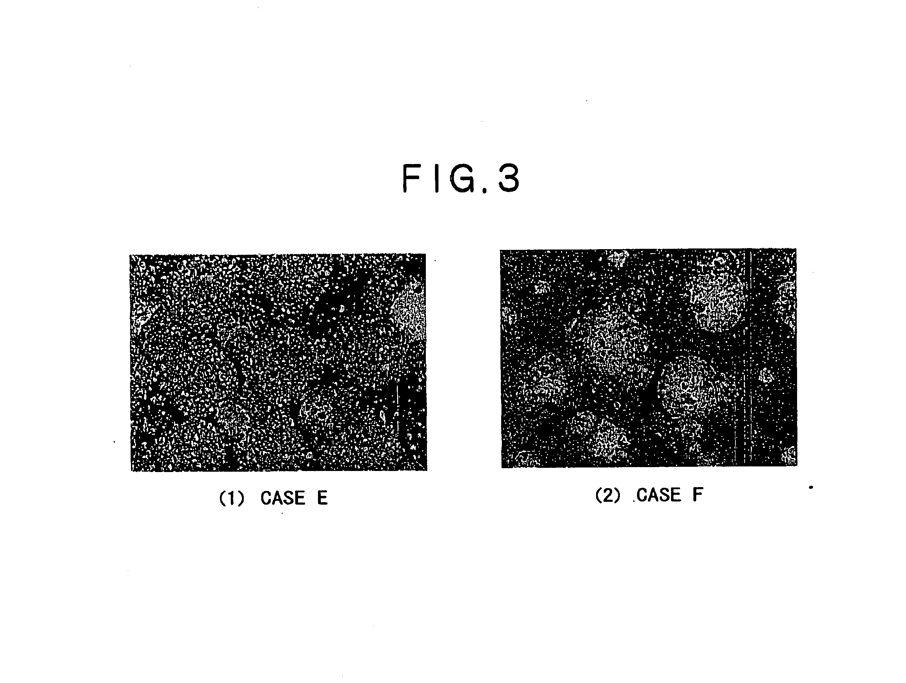

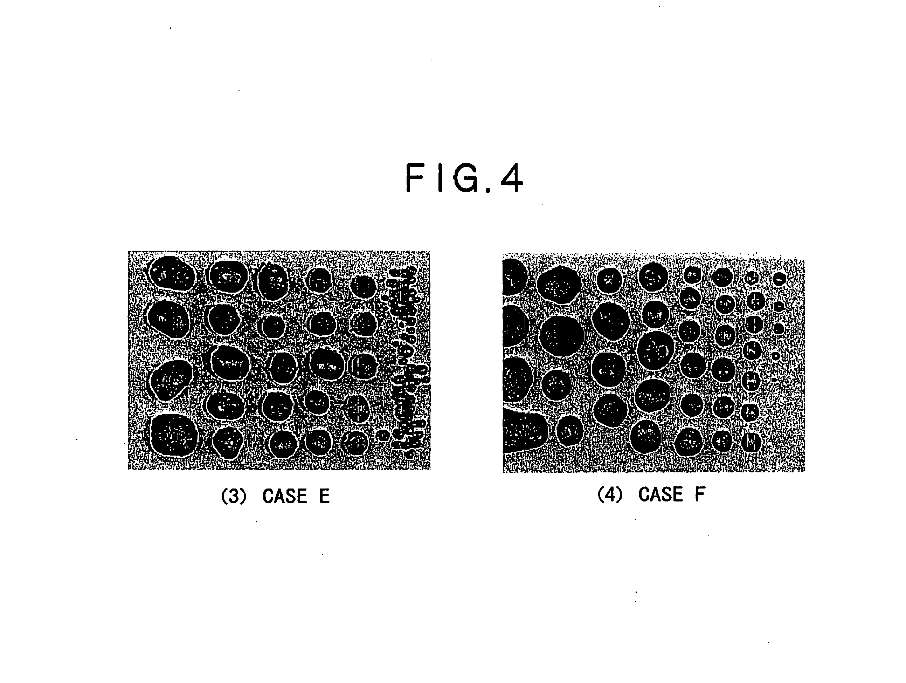

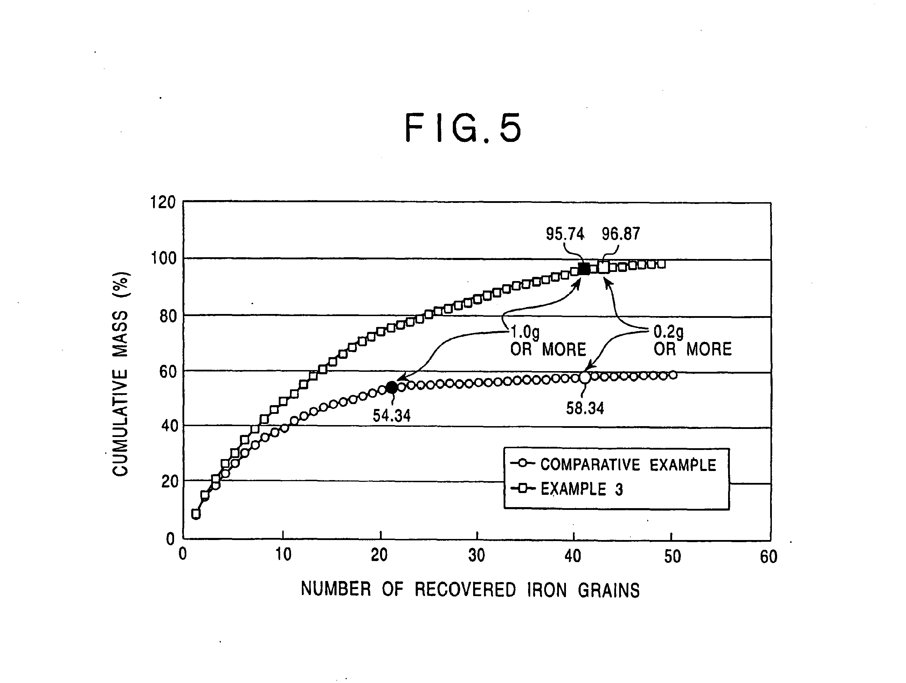

Fig. 1 includes photographs of products showing the state immediately after reducing melt according to an example and a comparative example. Fig. 2 includes photographs that show the appearance of metallic iron nuggets prepared by the example and the comparative example. Fig. 3 includes photographs of products showing the state immediately after reducing melt according to another example and another comparative example. Fig. 4 includes photographs that show the appearance of metallic iron nuggets prepared by yet another example and yet another comparative example. Fig. 5 is a graph showing the cumulative mass distributions, by size, of the metal nuggets prepared by a comparative example and an example.

As described above, in the present invention, a component that promotes cohesion of the by-product molten slag produced during the step of heating and reducing the metal oxide source is added to the material, and the resulting mixture is further heated after reduction to promote the separation of the by-product slag from the molten metal so as to form relatively large metal nuggets having a uniform size and a high purity at high productivity and high recovery rate. The present invention is described below using a process for making metallic iron nuggets from iron oxide, which is a representative example of a metal oxide, as an example.

The present invention uses the same processes for making high-purity metallic iron nuggets or blocks disclosed in publications such as USP 6,036,744, and Japanese Unexamined Patent Application Publications Nos. 09-256017, 2000-144224, and 11-131119, the processes comprising preparing a mixture of powders of a carbonaceous reductant and a iron-oxide-containing substance, forming the mixture into blocks if necessary, heating and reducing the mixture on a rotary hearth, and further heating the mixture so as to separate the molten metallic iron from the by-product slag by utilizing the difference in the specific gravities thereof. The present invention is an improved method based on these processes.

In particular, in the known processes described above, CaCO₃ or the like is added, if necessary, to the material which essentially contains a powder of an iron-oxide-containing substance and a carbonaceous reductant in order to adjust the basicity or to perform desulfurization. When the material needs to form a compact, an adequate amount of binder is further added to the material. The present invention is characterized in that a cohesion accelerator containing at least one of calcium fluoride (CaF₂) and boron oxide (B₂O₅), is added to the material in order to promote the cohesion of the molten slag.

The above powder material mixture containing the cohesion accelerator may be directly fed to a furnace such as a rotary hearth furnace. Preferably, the powder material is formed into pellets using a pelletizing plant of a pan type, a drum type, or the like, press-formed into briquettes, or lightly pressed-formed into a compact before it is fed to the furnace so as to efficiently promote heat conduction and accelerate reductive reaction inside the material mixture.

In order to efficiently perform solid reduction while maintaining the material mixture containing the cohesion accelerator in a solid state in the furnace without causing partial melting of the iron oxide component in the material, a two-stage heating process is preferably performed. The two-stage heating process includes: reducing the material chiefly by means of solid reduction while maintaining the furnace temperature at a temperature in the range of 1,200 to 1,500°C, and more preferably, 1,200 to 1,400°C; and then reducing the remaining iron oxide at an increased furnace temperature in the range of 1,400 to 1,500°C while allowing the generated metallic iron (reduced iron) to melt and to form granular iron. Under these conditions, iron nuggets can be reliably produced at a high yield. The time normally taken for this process is approximately 8 to 13 minutes. The solid reduction, melting, and cohesion of iron oxide can be completed in such a short time.

In the course of the process, the molten metallic iron forms granular iron and grows larger. Since the granular iron grow while excluding the by-product molten slag, the resulting molten iron nuggets contain substantially no slag and thus exhibit a high Fe purity. When these molten iron nuggets are cooled, solidified, and separated from the slag using a screen or by magnetic separation, metallic iron nuggets exhibiting a high Fe purity can be obtained.

The cohesion of the by-product slag can be promoted, and the problem of inhibiting cohesion of the molten metallic iron produced during the melting step after reduction can be avoided by adding a cohesion accelerator to the substance containing a metal oxide source and a carbonaceous reductant, even in the instances below:
1) when an iron oxide inherently having a poor cohesion property is used as the metal oxide source;
2) when a low iron grade material having a high gangue content is used;
3) when large amounts of auxiliary materials are used to adjust the basicity of a material having a high SiO₂ content; and
4) when CaCO₃ or the like is added to a material containing a carbonaceous reductant having a high sulfur content (for example, low-grade coal powder) for the purpose of desulfurization. Accordingly, the quality of the iron nuggets and the manufacturing cost therefor are not adversely affected even when an iron oxide inherently exhibiting a poor cohesion property is used in the material or when the amount of by-product slag is increased due to the addition of CaCO₃. The effect of promoting cohesion of the molten slag also leads to the promotion of cohesion and separation of the molten metallic iron. Thus, metallic iron nuggets can be obtained at a high yield, and the manufacturing cost of therefor can be reduced.

The effects of using the cohesion accelerator, which is the feature of the present invention, are as follows.

When a cohesion accelerator is added to the material, the melting point of the by-product slag produced during the melting stage decreases while the fluidity of the slag dramatically increases. As a result, when molten metallic iron forms iron nuggets, the molten slag does not inhibit or obstruct the cohesion of the dispersed molten metallic iron. The molten metallic iron can efficiently undergo cohesion while excluding the by-product slag and thus forms relatively large nuggets. This effect negates factors that inhibit cohesion of the molten metallic iron regardless of the amount of the by-product slag, because the addition of the cohesion accelerator decreases the melting point of the by-product slag and increases the fluidity and the cohesion property of the by-product slag. Accordingly, the cohesion property of the molten metallic iron can be increased, and iron nuggets having a high iron purity, a large diameter, and improved transportation and handling qualities can be efficiently manufactured while achieving a high yield even when an iron oxide source having a low cohesion property is used or when a low-grade iron-oxide-containing material and a low-grade carbonaceous reductant are used.

Another effect of using the cohesion accelerator is as follows.

Since the cohesion property of the molten metallic iron is increased as described above, the rate of large metallic iron nuggets in the resulting metallic iron nuggets increases. The generation of micro particles of metallic iron, which are difficult to separate, and the generation of inseparable metallic iron nuggets enclosing slag resulting from cohesion of the molten metallic iron when the molten metallic iron is not adequately separated from the by-product slag, can be prevented as much as is feasibly possible. Accordingly, when the metallic iron nuggets and the by-product slag are discharged from a reduction melting furnace such as a rotary hearth furnace, micro metallic iron particles, slag, and the mixtures of metallic iron nuggets and slag that pass through the clearance of a discharger such as a screw or a scraper and the hearth surface do not return again to the heating zone of the furnace. Moreover, the micro metallic iron particles, slag, and the mixtures of metallic iron nuggets and slag can be prevented from being pressed into a hearth protecting layer, hearth refractories, or a bedding layer on the hearth. These effects prevent damage such as infiltration and erosion of the hearth refractories by the micro metallic iron particles, slag, and the mixtures of the metallic iron particles and the slag, and deterioration and enlargement of the hearth refractories resulting from severe heat cycles. Accordingly, the life of the hearth refractories can be prolonged, a problem of blockage of the product discharge section can be resolved, and long-term continuous operation can be reliably performed.

When the fluidity of the by-product slag is improved by using the cohesion accelerator, the carburization reaction of the metallic iron during the heating and reducing stage is promoted, thereby also accelerating the melting of the by-product slag, and the time taken to reduce and melt the material is shortened. Since the fluidity of the by-product slag is increased, the rate at which the molten metallic iron and molten slag grow into iron nuggets also increases. As a result, the time from the beginning of melting the metallic iron prepared by solid reduction to the completion of the formation of molten metallic iron nuggets can be shortened, in addition to the above-described reduction in the time required for reduction melting. Thus, productivity can be dramatically improved while maintaining a high yield of high-purity, large metallic iron nuggets.

In general, a cohesion accelerator that enters the reduced metal and decreases the purity of, for example, reduced iron, should be avoided. A cohesion accelerator which combines with slag components and readily separates from the metallic iron should be selected. According to the present invention, the cohesion accelerators include calcium fluoride (CaF₂) and boron oxide (B₂O₅). These components may be used alone or in combination, if necessary. Among these components, CaF₂, and more particularly, fluorite containing CaF₂ as the primary component, is particularly preferable in view of cost and cohesion acceleration effects.

The cohesion accelerator does not exhibit sufficient effects when the amount of the cohesion accelerator is insufficient. The effects of promoting cohesion are saturated at an excessive amount of cohesion accelerator. Thus, an excessive amount of the cohesion accelerator is not economical and increases the cost of processing an increased amount of by-product slag. In view of the above, the content of the cohesion accelerator is in the range of 0.2 to 2.5%, and preferably, 0.4 to 2.0%, of the material. The content of the cohesion accelerator based on the slag component in the material is preferably in the range of 1 to 11%, and more preferably, 3 to 8%.

No limit is imposed as to the apparatuses to which the present invention can be applied. In other words, no limit is imposed as to the structure of the reducing melt furnace. For example, the present invention can be applied to various types of reducing melt equipment disclosed in publications such as USP 6,036,744, and Japanese Unexamined Patent Application Publications Nos. 09-256017, 2000-144224, and 11-131119. Use of a moving bed furnace or a rotary hearth furnace is particularly preferable since the process of heating and reducing the material, melting the reduced metal, forming granular iron, and separating the by-product slag from the metallic iron can be continuously and effectively performed using these furnaces.

In this invention, no limit is imposed as to the type of metal oxide used as a metal source. For example, nickel-containing ore, chromium-containing ore, recycled scrap containing nickel or chromium, or the like may be used. The most common source of iron oxide when making iron nuggets is iron ore, but steel-making scrap and waste materials, such as steel-making dust, produced during the iron-making process in an iron-making plant, and recycled scrap may also be used as the iron source. These materials can be used either alone or in combination, if necessary. For example, stainless-steel dust produced when making stainless-steel ingots in an electric furnace or the like contains large amounts of nonferrous valuable metals such as Ni, Cr, and Mo. By using the stainless-steel dust, either alone or in combination with an iron source such as iron ore or mill scale, as a metal oxide source, Ni, Cr, Mo, and the like can be captured inside the iron nuggets and can be efficiently recovered.

When a metal source, such as steel-making slag, that contains large amounts of slag components is used, an excessive amount of by-product slag relative to the metal nuggets is produced and inhibits the cohesion of the metal, thereby decreasing the recovery rate of large metal nuggets. Accordingly, in order to prevent an increase in the amount of the by-product slag and to improve the recovery rate of the large metal nuggets, the slag component content in the material mixture should be as low as is feasibly possible. In particular, the slag component content in the material mixture is preferably controlled so as to limit the amount of the slag to approximately 500 kg per ton of the metal nuggets.

In implementing the present invention, in order to reduce the metal oxide by means of solid reduction as much as possible and to prevent generation of molten metal oxide which significantly erodes hearth refractories, CaO or CaCo₃, which adjust the basicity of the by-product slag as shown in the examples below, may be added to the material depending on the type of metal-oxide-containing substance and the composition of the slag component contained in the carbonaceous reductant. It is within the technical scope of the present invention to use CaO or CaCO₃ during the operation.

The configuration, the effects, and the advantages of the present invention are described below by way of examples. These examples do not limit the scope of the present invention. Various modifications are possible within the scope of the spirit of the invention described herein. The technical scope of the present invention includes those modifications.

### EXAMPLE 1

In this example, magnetite iron ore having a high gangue content, and more specifically, a high SiO₂ content of 5.0% or more, was used as an iron oxide source. The chemical composition of the ore is shown in Table 1.

**Table 1**

| Chemical Composition of Material Iron Ore Having a High SiO₂ Content (mass %) | | | | | | | | |
|---|---|---|---|---|---|---|---|---|
| T. Fe | Fe₂O₃ | Fe₃O₄ | SiO₂ | Al₂O₃ | CaO | MgO | Other | Total |
| 67.21 | 1.15 | 91.77 | 5.4 1 | 0.28 | 0.81 | 0.45 | 0.14 | 100 |

The designed composition of high-SiO₂ iron ore, a carbonaceous reductant, a binder (wheat flour), CaCO₃ (basicity adjustor), and CaF₂ (cohesion accelerator) in the material pellets was adjusted as shown in Table 2.

**Table 2**

| Designed Composition of the Material Pellets (mass %) | | | | |
|---|---|---|---|---|
| Composition | Case A | Case B | Case C | Case D |
| | (Comparative Example) | (Comparative Example | (Example) | (Example) |
| High-SiO₂ iron ore | 78.88 | 72.33 | 73.42 | 71.23 |
| Coal (carbonaceous reductant) | 19.62 | 18.17 | 17.08 | 17.77 |
| Binder | 1.5 | 1.5 | 1.5 | 1.5 |
| CaCO₃ | 0 | 8 | 7 | 8.5 |
| CaF₂ | 0 | 0 | 1 | 1 |
| Total | 100 | 100 | 100 | 100 |

In Case A, the basicity was not adjusted. In Cases B and C, an adequate amount of CaCO₃ was used to adjust the basicity of the slag (CaO/SiO₂) to approximately 1.15. In Case D, an adequate amount of CaCO₃ was used to adjust the basicity of the slag (CaO/SiO₂) to 1.3 or more. Cases C and D were the examples implementing the present invention, and contained a small amount of fluorite (CaF₂) to enhance the fluidity of the by-product slag. The designed amounts of slag were 127.8 kg/ton (iron nugget) in Case A, 215.7 kg/ton (iron nugget) in Case B, 212.7 kg/ton (iron nugget) in Case C, and 233.8 kg/ton (iron nugget) in Case D.

In Cases A and B, the compositions were adjusted to examine the effect of the by-product slag on the cohesion property of the iron nuggets. In Cases B, C, and D, the compositions were adjusted to examine the effect of adding a small amount of a cohesion accelerator (CaF₂) on the improvement of the cohesion property of the iron nuggets. The addition of a small amount of the cohesion accelerator is the feature of the present invention. The material pellets were substantially spherical and had a diameter of approximately 16 to 20 mm.

In each of these cases, 250 to 265 grams of the above-described material pellets were placed on a carbonaceous bedding material (coke powder) provided on the entire surface of a alumina foam board, were charged into a box furnace, and were heated for 12 to 14 minutes in a 100% nitrogen atmosphere at an atmosphere temperature of 1,430 to 1,450°C. The recovery rate of the metallic iron nuggets of the above cases is shown in Table 3.

The recovery rate of the metallic iron nuggets is the ratio of the mass of the resulting metallic iron nuggets actually produced to the theoretical mass of the metallic iron nuggets calculated based on the analytical value of the total Fe content in the material pellets. In the description below, the recovery rate of the metallic iron nuggets to the mass of the iron contained in the material pellets was evaluated from two aspects: (1) the mass ratio of the metallic iron nuggets that have a mass of approximately 0.2 gram or more per nugget; and (2) the mass ratio of the metallic iron nuggets that have a mass of 1.0 gram or more per nugget.

**Table 3**

| Recovery Rate of Metallic iron nuggets (mass %) | | | | |
|---|---|---|---|---|
| Composition | Case A (Comparative Example) | Case B (Comparative Example) | Case C (Example) | Case D (Example) |
| CaC0₃ content (%) | 0.0 | 8.0 | 7.0 | 8.5 |
| CaF₂ content (%) | 0.0 | 0.0 | 1.0 | 1.0 |
| (1) Recovery rate of metallic iron nuggets having a mass of approximately 0.2 g or more (%) | 96.8 | 84.6 | 101.7 | 99.7 |
| (2) Recovery rate of metallic iron nuggets having a mass of approximately 1.0 g or more (%) | 92.86 | 80.02 | 100.1 | 96.2 |

Case A was compared with Case B. Case B, in which the amount of the by-product slag was increased due to the addition of 8% of CaCO₃, clearly demonstrated a tendency of an increase in the production rate of metallic iron nuggets having a small diameter. The recovery rates of the metallic iron nuggets of (1) 0.2 g or more and (2) 1.0 gram or more were clearly low. Particularly the recovery rate of the metallic iron nuggets having a mass of 1.0 g or more decreased by 12% or more. It should be noted that in Case B, large amounts of micro particles of metallic iron adhered onto the surface of the by-product slag, and those metallic iron nuggets that existed separately from the slag enclosed slag particles. Thus, the separation of the metallic iron nuggets from the slag was difficult.

On the other hand, when Case B was compared with Case C, although the amount of the by-product slag was increased in both Case C and Case B, Case C demonstrated that the cohesion of the molten metallic iron could be dramatically improved by adding CaF₂. In particular, the yields of both metallic iron nuggets having a mass of 0.2 g or more per nugget and metallic iron nuggets having a mass of 1.0 g or more per nugget were dramatically improved. In Case C, the recovery rate was improved by 20 to 26% compared to Case B, achieving the recovery rate exceeding 100%. The recovery rate exceeded 100% because the total iron content of the input material was used as the denominator and the amount of crude iron that partially contains recovered carbon, silicon, or the like, was included in the numerator when calculating the recovery yield.

In Case D, the CaCO₃ content was increased to 8.5%, and an increase in the amount of the slag resulted in the tendency of decrease in the yield. However, the recovery rate of the metallic iron nuggets having a mass of 0.2 g or more was approximately 100%, still achieving a high yield. The improvement effect is obvious when compared to Case A in which the amount of the by-product slag is small. Even a difference of 1.0% in the recovery rate of the metal nuggets has a significantly large impact on the cost in actual operations, demonstrating the distinct feature of the present invention.

Photographs showing the appearance of the metallic iron nuggets and the slag in Cases B and C are shown in Fig. 1. Photographs that show the size distribution of the metallic iron nuggets in Cases B and C are shown in Fig. 2. Note that the photographs showing the appearance of the metallic iron nuggets and the slag show the state of the produced metallic iron nuggets and the slag in a tray after reducing melt.

As is apparent from Fig. 1, Case B, in which 8% of CaCO₃ was used, clearly demonstrated a tendency of an increase in the rate of producing metallic iron nuggets having a small diameter. In particular, as is apparent from the figure, a large number of micro particles of metallic iron adhered onto the surface of the resulting slag, and those metallic iron nuggets that existed separately from the slag enclosed slag particles and firmly bonded to these slag particles. Thus, the separation of the metallic iron nuggets from the slag was difficult.

Unlike in Case B, in Case C, in which CaF₂ was added as a cohesion accelerator, the rate of production of small metallic iron nuggets did not decrease, and nearly all were large metallic iron nuggets. Substantially no small metallic iron particles, which adhere onto the surface of the slag nuggets to be firmly bonded thereto, were found. In Case B, the produced slag was glassy and blackish green. The dimensions of the produced slag increased as the basic unit of the slag increased. However, the amount of the small metallic iron particles adhering onto the surface of the slag also increased except for Cases C and D in which CaF₂ was added.

Tables 4 and 5 below show the results of the chemical analysis of the produced metallic iron nuggets and slag. Since the metallic iron nuggets did not substantially contain heavy metals other than the main gangue components such as SiO₂ in the ore, only five primary elements are shown in these tables.

**Table 4**

| Results of Chemical Analysis of Metallic iron nuggets (mass %) | | | | | |
|---|---|---|---|---|---|
| | C | Si | Mn | P | S |
| Case A | | | | | |
| (Comparative Example) | 3.23 | 0.32 | 0.09 | 0.040 | 0.127 |
| Case B | | | | | |
| (Comparative Example) | 3.41 | 0.20 | 0.13 | 0.036 | 0.078 |
| Case C | | | | | |
| (Example) | 3.74 | 0.21 | 0.18 | 0.037 | 0.059 |
| Case D | | | | | |
| (Example) | 4.01 | 0.17 | 0.23 | 0.034 | 0.033 |

**Table 5**

| Results of Chemical Analysis of Slag (mass %) | | | | | | | | |
|---|---|---|---|---|---|---|---|---|
| | T.Fe | FeO | SiO₂ | CaO | Al₂O₃ | MgO | S | Basicity |
| Case A | | | | | | | | |
| (Comparative Example) | 4.76 | 1.64 | 64.33 | 10.21 | 9.82 | 6.50 | 0.072 | 0.159 |
| Case B | | | | | | | | |
| (Comparative Example) | 3.97 | 0.39 | 40.54 | 45.04 | 6.41 | 4.04 | 0.442 | 1.111 |
| Case C | | | | | | | | |
| (Example) | 1.58 | 0.28 | 40.42 | 46.73 | 6.46 | 4.09 | 0.408 | 1.156 |
| Case D | | | | | | | | |
| (Example) | 4.22 | 0.25 | 35.09 | 47.72 | 5.70 | 3.71 | 0.558 | 1.360 |

As is apparent from Tables 4 and 5, Cases C and D, in which 7.0 to 8.5% of CaCO₃ and 1.0% of CaF₂ as a cohesion accelerator were used, maintained a high recovery yield of the metallic iron nuggets while achieving a low sulfur content in the metallic iron nuggets. Particularly, in Case D, high-quality metallic iron nuggets having a distinctively low sulfur content of 0.033% were obtained.

### EXAMPLE 2

In this example, iron ore having a poor cohesion property, i.e., hematite ore, was used in the material to confirm the effect of adding approximately 1.0% of CaF₂ as the cohesion accelerator. The experiments of reducing melt were conducted as in Example 1 above.

Table 6 shows the primary chemical composition of the hematite ore used in the experiment. Figs. 3 and 4 include photographs showing the appearances of the state of the products immediately after the reducing melt (Fig. 3) on an aluminum board tray and the recovered metallic iron nuggets (Fig. 4) obtained in Case F which implements the present invention and uses CaF₂ as the cohesion accelerator. Figs. 3 and 4 also include photographs showing the appearances of the state of the products immediately after the reducing melt (Fig. 3) on an aluminum board tray and the recovered metallic iron nuggets (Fig. 4) obtained in Case E which is a comparative example that does not use CaF₂

**Table 6**

| Chemical Composition of Hematite Ore (mass %) | | | | | | | | |
|---|---|---|---|---|---|---|---|---|
| T. Fe | FeO | Fe₂O₃ | SiO₂ | Al₂O₃ | CaO | MgO | Other | Total |
| 68.01 | 0.1 | 97.13 | 1.08 | 0.47 | 0.08 | 0.06 | 1.13 | 100 |

As in Example 1, no increase in the production amount of the small metallic iron nuggets was observed when CaF₂ was used. Nearly all were large metallic iron nuggets. The improvement effect of adding the cohesion accelerator was apparent.

### EXAMPLE 3

In this example, Na₂CO₃ was used as the cohesion accelerator, replacing CaF₂. The conditions of the experiment were substantially same as in Example 1 above, and the composition of the material is shown in Table 7 below. Table 7 also describes the composition of the material of the comparative example.

**Table 7**

| Designed Compound Ratio of Material Pellets (mass %) | | | | | |
|---|---|---|---|---|---|
| | Hematite ore | Coal | Binder | CaCO₃ | Na₂CO₃ |
| Example 3 | 74.41 | 20.09 | 1.50 | 4.0 | - |
| Comparative Example | 71.88 | 21.02 | 1.50 | 4.0 | 1.6 |

Fig. 5 shows a cumulative mass distribution of the metallic iron nuggets obtained in Example 3 above and Comparative Example. In determining the cumulative mass distribution, the recovered metallic iron nuggets were classified by a screen, and the number was added from those having the largest size to those having the smallest size. The figure also shows the cumulative mass percentage of the metallic iron nuggets that have a mass of 0.2 g or more and 1.0 g or more.

As is apparent from the figure, when the cumulative mass ratio of relatively large metallic iron nuggets having a mass of 1.0 g or more is compared, that of Comparative Example was 54.34 percent by mass whereas that of Example 3 was 95.74 percent by mass, which is significantly higher. As for the cumulative mass ratio of the metallic iron nuggets of 0.2 g or more, that of Comparative Example was 58.34 percent by mass. This shows that although this ratio is slightly higher than the 54.34 percent by mass of the metallic iron nuggets of 1.0 g or more, the improvement is substantially none, which plainly points out how large the production rate of the micro particles of metallic iron is in Comparative Example. In Example 3, the cumulative mass ratio of the metallic iron nuggets of 0.2 g or more was 95.9 percent by mass, which is significantly high. This demonstrates that large metallic iron nuggets having excellent handling quality can be obtained at a high yield in Example 3.

### EXAMPLE 4

Stainless-steel dust and mill scale having the compositions described below were used as an iron oxide source. A powder mixture of a carbonaceous reductant (coal powder) and a binder (wheat flour) and a powder mixture of the carbonaceous reductant, the binder, and an CaF₂, i.e., a cohesion accelerator, whose compound ratios are shown in Table 8 was added to this iron oxide source so as to make pellets having a diameter of approximately 16 to 20 mm.

The main components, by mass %, of the stainless-steel dust were as follows:
T. Fe: 25.7%, M. Fe: 1.54%, SiO₂: 6.0%, Al₂O₃: 0.54%, CaO: 3.66%, MgO: 1.3%, M. Ni: 0.27%, NiO: 7.91%, M. Cr: 0.15%, Cr₂O₃: 16.07%, M. Mn: 0.23%, MnO: 6.44%, MoO: 6.44%, ZnO: 5.53%, and C: 0.56%.

The main components, by mass %, of the mill scale were as follows:
T. Fe: 72.2%, M. Fe: 12.6%, SiO₂: 1.95%, Al₂O₃: 0.42%, CaO: 1.5%, MgO: 0.1%, MnO: 0.9%.

**Table 8**

| Composition of Material Pellets | | | | | |
|---|---|---|---|---|---|
| | Stainless-steel dust | Mill scale | Coal | Binder | CaF₂ |
| Invention Example | 40.20 | 40.20 | 16.63 | 1.48 | 1.50 |
| Comparative Example | 40.84 | 40.84 | 16.82 | 1.50 | 0 |

The reducing melt experiment using a box furnace was conducted as in Example 1 above using 350 grams (approximately 40) of each type of the material pellets. The recovery rate of the metallic iron nuggets having a mass of 0.6 g or more was then compared.

The results showed that in Comparative Example that did not use CaF₂, a large number of small iron nuggets having a mass of less than 0.6 g was produced, and the recovery rate of the large iron nuggets having a mass or 0.6 g or more was approximately 62%. In contrast, in Invention Example using CaF₂ as the cohesion accelerator, the amount of the small metallic iron nuggets produced was remarkably small, and the recovery rate of the large iron nuggets having a mass of 0.6 g or more was distinctively high, i.e., 98.3%.

When the material having the above composition is used, 300 to 400 kg of slag is produced per ton of metallic iron nuggets and significantly affects the melting and cohesion of the reduced iron. In Comparative Example above, the fluidity of the slag was poor, and thus the slag obstructed the cohesion of micro particles of reduced iron produced by heat reduction. As a result, a large amount of micro particles of metallic iron was produced. In contrast, in Invention Example using 1.5% of CaF₂ as a cohesion accelerator, the fluidity of the by-product slag was increased, thereby promoting the cohesion of micro particles of reduced iron, and nearly all of the produced reduced iron combined into large iron nuggets by cohesion.

### EXAMPLE 5

Both stainless-steel dust and mill scale produced when making stainless-steel ingots using an electric furnace were used as an iron oxide source at compound ratios shown in Table 9 below. A carbonaceous reductant (coal powder), a binder (wheat powder), and 1.5 percent by mass of CaF₂ as a cohesion accelerator were added to this iron oxide source to prepare a mixture powder. This mixture powder was formed into pellets having a diameter of approximately 16 to 20 mm. The reducing melt experiment was performed in a box furnace as in Example 4 above using 350 g (approximately 40) of each type of material pellets. The amount of the slag produced as the by-product, and the state of the iron nuggets and the by-product slag were examined. Note that in this experiment, 1.5 percent by mass of CaF₂ was used as a cohesion accelerator in all of the cases.

The purpose of the experiment was to examine the effects of the compound ratio of the electric-furnace dust as the iron source on the amount of the by-product slag. In other words, when reducing melt is performed using carbon-containing pellets using electric-furnace dust (stainless-steel dust) as an iron source, the amount of slag has a large influence on the stable operation of the process. To be more specific, the amount of the by-product slag increases as the compound ratio of the electric-furnace dust in the material increases. As a result, the slag may completely cover the iron nuggets and obstruct the cohesion of micro iron particles. Moreover, the dissolution of the hearth refractories may be further accelerated by the increased amount of the molten slag. In this experiment, the ratio of the electric-furnace dust was varied to approximately 25 mass %, 30 mass %, 40 mass %, and 50 mass % in Cases 1, 2, 3, and 4, respectively, so as to examine the state of the iron nuggets generated by reducing melt and the by-product slag. The amount of slag in each of these cases is also shown in Table 9.

The main components, by mass %, of the stainless-steel dust was as follows:
T. Fe: 23.5%, M. Fe: 15.7%, SiO₂: 8.2%, Al₂O₃: 2.7%, CaO: 14.2%, MgO: 3.6%, M. Ni: 0.8%, NiO: 3.9%, M. Cr: 0.3%, Cr₂O₃: 10.8%, M. Mn: 0.6%, MnO: 3.2%, MoO: 1.1%, ZnO: 9.6%, and C: 0.9%.

The main components, by mass %, of the mill scale were as follows:
T. Fe: 75.1%, M. Fe: 0.07%, SiO₂: 0.01%, Al₂O₃: 0.07%, CaO: 0.02%, MgO: 0.01%, MnO: 0.29%.

**Table 9**

| Composition of Material Pellets (mass%) | | | | | | |
|---|---|---|---|---|---|---|
| | Stainless -steel dust | Mill scale | Coal | Binder | CaF₂ | Amount of by-product slag (kg/ton of iron nuggets) |
| Case 1 | 23.59 | 55.05 | 18.38 | 1.48 | 1.5 | 217.2 |
| Case 2 | 31.53 | 47.3 | 18.19 | 1.48 | 1.5 | 315.4 |
| Case 3 | 40.18 | 40.18 | 16.66 | 1.48 | 1.5 | 487.8 |
| Case 4 | 48.14 | 32.09 | 16.79 | 1.48 | 1.5 | 613.7 |

As is apparent from Table 9, the amount of the by-product slag clearly increased as the amount of the stainless-steel dust increased. In Cases 1 and 2, the amount of by-product slag was not significantly large compared to the amount of iron nuggets, and the iron nuggets after heat-reduction was sufficiently distinguishable from the by-product slag on the alumina tray. The separation of the iron nuggets from the by-product slag was also easy. In Case 4, however, the amount of the by-product slag was significantly large compared with the produced iron nuggets, and substantially all of the iron nuggets were covered with the by-product slag. Moreover, it was confirmed that the iron nuggets concentrated at the lower side of the alumina tray. In such a state, there is a danger of the hearth refractories coming into direct contact with the molten metallic iron, thereby accelerating the dissolution of the hearth material.

In Case 3, the stainless-steel dust and the mill scale were used at a ratio of 50:50 as an iron oxide source. This ratio is substantially considered to be the limit of the ratio that allows effective separation of the iron nuggets from the by-product slag while preventing the deterioration of the hearth refractories. In this case, the amount of the by-product slag relative to a ton of the iron nuggets produced was approximately 500 kg. These results show that when an iron source, such as stainless-steel dust, having a high slag component is used as the iron source, the composition is preferably adjusted so that the amount of the by-product slag does not exceed approximately 500 kg per ton of the iron nuggets produced.

In Cases 1 to 4 of this example, the recovery rates of the Cr, Ni, and Mo in the stainless-steel dust were examined. The results are shown in Table 10. These results also demonstrate that the recovery rate of the valuable metals other than iron can be increased by limiting the amount of the by-product slag as small as possible during the step of preparing the material.

**Table 10**

| Recovery Rate of valuable Metals in Stainless-steel Dust (mass %) | | | |
|---|---|---|---|
| | Cr | Ni | Mo |
| Case 1 | 88.10 | 84.3 | 90.99 |
| Case 2 | 71.83 | 78.0 | 86.50 |
| Case 3 | 51.31 | 70.2 | 89.62 |
| Case 4 | 50.70 | 63.4 | 81.31 |

According to the present invention having the above-described features, the separation of the molten metal, produced by reducing melt, from the by-product slag can be accelerated by adding a cohesion accelerator such as fluorite (CaF₂) to the material as an auxiliary material, the cohesion accelerator having an effect of improving the fluidity of the by-product molten metal. As a result, large-size high-quality metal nuggets having a high purity of metal such as iron and superior transporting and handling qualities can be manufactured at a high yield and high productivity.

## Claims

1. A method for making metal nuggets, comprising heating a material comprising a metal-oxide-containing substance and a carbonaceous reductant to reduce metal oxide contained in the material and further heating the resultant so as to melt metal while allowing the metal to separate from a by-product slag component and allowing the by-product slag component to undergo cohesion,
wherein a cohesion accelerator is blended into the material to accelerate cohesion of the by-product slag, wherein the cohesion accelerator consists of at least one of calcium fluoride and boron oxide, and wherein the content of the cohesion accelerator in the material is in the range of 0.2 to 2.5 percent by mass.

2. A method according to claim 1, wherein the material is a mixture of powders of the metal-oxide-containing substance, the carbonaceous reductant, and the cohesion accelerator.

3. A method according to claim 2, wherein the mixture is formed into pellets or briquettes, or press-formed into a compact, and used as the material.

4. A method according to one of claims 1 to 3, wherein fluorite is used as the cohesion accelerator.

5. A method according to one of claims 1 to 4, wherein a moving bed furnace is used to heat and reduce the material.

6. A method according to one of claims 1 to 4, wherein a rotary hearth furnace is used to heat and reduce the material.

7. A method according to one of claims 5 and 6, wherein a layer of a carbonaceous material is bed on a hearth in advance, and then the material is fed to be heated and reduced on the hearth.

8. A method according to one of claims 1 to 7, wherein iron oxide is used as the metal oxide.

9. A method according to one of claims 1 to 8, wherein the metal-oxide-containing substance comprises at least one of iron ore, steel-making dust, steel-making waste materials, and metal scrap.

10. A method according to claim 9, wherein dust generated during producing stainless-steel ingots is used as the steel-making dust so as to recover valuable metals contained in the dust.

## Patentansprüche

1. Verfahren zum Herstellen von Metallnuggets, umfassend das Erwärmen eines Materials, umfassend eine Metalloxid-haltige Substanz und ein kohlenstoffhaltiges Reduktionsmittel, um das in dem Material enthaltene Metalloxid zu reduzieren, und das weitere Erwärmen des erhaltenen Materials, um so das Metall zu schmelzen, während dem Metall erlaubt wird, sich von einer Nebenprodukt-Schlackekomponente abzutrennen, und der Nebenprodukt-Schlackekomponente erlaubt wird, Kohäsion einzugehen,
wobei ein Kohäsionsbeschleunigungsmittel in das Material eingemischt wird, um die Kohäsion der Nebenprodukt-Schlacke zu beschleunigen, wobei das Kohäsionsbeschleunigungsmittel zumindest aus einem von Calciumfluorid und Boroxid besteht, und wobei der Gehalt des Kohäsionsbeschleunigungsmittels in dem Material in dem Bereich von 0,2 bis 2,5 Masse-% ist.

2. Verfahren nach Anspruch 1, wobei das Material ein Gemisch von Pulvern der Metalloxid-haltigen Substanz, des kohlenstoffhaltigen Reduktionsmittels und des Kohäsionsbeschleunigungsmittels ist.

3. Verfahren nach Anspruch 2, wobei das Gemisch in Pellets oder Briketts geformt, oder in einen Pressling formgepresst, und als das Material verwendet wird.

4. Verfahren nach einem der Ansprüchen 1 bis 3, wobei Fluorit als das Kohäsionsbeschleunigungsmittel verwendet wird.

5. Verfahren nach einem der Ansprüche 1 bis 4, wobei ein Ofen mit einem sich bewegenden Bett verwendet wird, um das Material zu erwärmen und zu reduzieren.

6. Verfahren nach einem der Ansprüche 1 bis 4, wobei ein Drehherdofen verwendet wird, um das Material zu erwärmen und zu reduzieren.

7. Verfahren nach einem der Ansprüche 5 und 6, wobei eine Schicht eines kohlenstoffhaltigen Materials vorher auf einen Herd gelegt wird, und dann das zu erwärmende und zu reduzierende Material auf den Herd beschickt wird.

8. Verfahren nach einem der Ansprüche 1 bis 7, wobei Eisenoxid als das Metalloxid verwendet wird.

9. Verfahren nach einem der Ansprüche 1 bis 8, wobei die Metalloxid-haltige Substanz zumindest eines von Eisenerz, Stahlerzeugungsstaub, Stahlerzeugungsabfallmateralien und Schrott umfasst.

10. Verfahren nach Anspruch 9, wobei Staub, welcher während der Herstellung von rostfreien Stahlbarren erzeugt wird, als Stahlerzeugungsstaub verwendet wird, um so wertvolle, in dem Staub enthaltene Metalle zurückzugewinnen.

## Revendications

1. Procédé pour fabriquer de la grenaille de métal, comprenant le chauffage d'un matériau comportant une substance contenant de l'oxyde métallique et un réducteur carbonacé pour réduire l'oxyde métallique contenu dans le matériau, puis à chauffer de nouveau le produit réactionnel afin de faire fondre le métal tout en permettant au métal de se séparer d'un composant sous-produit de scorie et tout en permettant au composant sous-produit de scorie de subir une cohésion,
dans lequel un accélérateur de cohésion est mélangé dans le matériau pour accélérer la cohésion de la scorie de sous-produit,
dans lequel l'accélérateur de cohésion est constitué d'au moins un du fluorure de calcium et de l'oxyde de bore,
et dans lequel la teneur de l'accélérateur de cohésion dans le matériau se situe dans la gamme de 0,2 à 2,5 pour cent en masse.

2. Procédé selon la revendication 1, dans lequel le matériau est un mélange de poudres de substance contenant de l'oxyde métallique, de réducteur carboné et d'accélérateur de cohésion.

3. Procédé selon la revendication 2, dans lequel le mélange est formé en pastilles ou en briquettes, ou moulé à pression en un comprimé, et utilisé comme matériau.

4. Procédé selon l'une quelconque des revendications 1 à 3, dans lequel de la fluorite est utilisée comme accélérateur de cohésion.

5. Procédé selon l'une quelconque des revendications 1 à 4, dans lequel un four à lit mobile est utilisé pour chauffer et réduire le matériau.

6. Procédé selon l'une quelconque des revendications 1 à 4, dans lequel un four à sole tournante est utilisé pour chauffer et réduire le matériau.

7. Procédé selon l'une quelconque des revendications 5 et 6, dans lequel une couche d'un matériau carboné sert de lit sur une sole en mouvement, puis le matériau est acheminé pour être chauffé et réduit sur la sole.

8. Procédé selon l'une quelconque des revendications 1 à 7, dans lequel de l'oxyde de fer est utilisé comme oxyde métallique.

9. Procédé selon l'une quelconque des revendications 1 à 8, dans lequel la substance contenant de l'oxyde métallique comprend au moins un parmi le minerai de fer, la poussière sidérurgique, des matériaux sidérurgiques résiduels et des débris de métal.

10. Procédé selon la revendication 9, dans lequel la poussière générée pendant la production de lingots d'acier inoxydable est utilisée comme poussière sidérurgique de manière à récupérer les métaux de valeur contenus dans cette poussière.
